# FASCICULE DE BREVET EUROPEEN

(11) **EP 3 398 316 B1**
(45) Date de publication et mention de la délivrance du brevet: **18.08.2021**
(21) Numéro de dépôt: 16831898.8
(22) Date de dépôt: 22.12.2016
(51) Int. Cl.: H04L 29/06

(54) **PROCEDE DE TRAITEMENT D'UN SERVICE RESEAU**
VERFAHREN ZUR VERARBEITUNG EINES NETZWERKDIENSTES
METHOD FOR PROCESSING A NETWORK SERVICE

(30) Priorité: 30.12.2015 FR 1563474
(43) Date de publication de la demande: 07.11.2018
(73) Titulaire: ORANGE, 92130 Issy-les-Moulineaux (FR)
(72) Inventeur: BIHANNIC, Nicolas, 22560 Trebeurden (FR); FROMENTOUX, Gaël, 22560 Pleumeur Bodou (FR); FIEAU, Frédéric, 75013 Paris (FR)
(86) Numéro de dépôt international: PCT/FR2016/053633
(87) Numéro de publication internationale: WO 2017/115037

(56) Documents cités:
- US-A1- 2014 283 051
- US-A1- 2015 341 377
- "Network Functions Virtualisation (NFV); Ecosystem; Report on SDN Usage in NFV Architectural Framework;Draft ETSI GS NFV-EVE 005", ETSI DRAFT; DRAFT ETSI GS NFV-EVE 005, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.2.0, 29 septembre 2015 (2015-09-29), pages 1-130, XP014263316,

## Description

L'invention se situe dans le domaine des réseaux de télécommunication, et concerne plus particulièrement un procédé de traitement d'un service réseau au sein d'une infrastructure en nuage en cas d'attaque réseau.

L'organisme de normalisation ETSI (pour « European Télécommunications Standards Institute ») a lancé début 2013 un projet dénommé NFV (pour «Network Functions Virtualization ») pour établir, entre les experts des secteurs des télécommunications et des technologies de l'information, les premières spécifications dans le domaine de la virtualisation (c'est-à-dire la dématérialisation) des fonctions utilisées dans les réseaux de télécommunications, désignées par la suite par fonctions réseau virtualisées (également appelées VNF pour « Virtualized Network Function »). Ces fonctions réseau virtualisées désignent par exemple les fonctions mises en œuvre par une entité de gestion de mobilité virtualisée (e.g. MME pour « Mobility Management Entity »), une passerelle (e.g. P-GW pour « PDN Gateway »), un pare-feu, etc.

La virtualisation des fonctions réseau est réalisée par des infrastructures dites en nuage, plus communément désignés par « cloud », qui implémentent et hébergent ces fonctions sur des machines virtuelles accessibles par exemple par l'intermédiaire d'une application réseau. Ces machines virtuelles utilisent des ressources informatiques et réseau matérielles distantes (ex. connectivité réseau, puissance de calcul, espaces de stockage, serveurs, applications, etc.), gérées par l'infrastructure en nuage, et mutualisées entre ses différents clients en fonction de leurs besoins respectifs. Les clients peuvent ainsi accéder à ces ressources sans avoir à administrer l'infrastructure sous-jacente de gestion de ces ressources, qui est souvent complexe.

Composées ensemble, les fonctions réseau virtualisées forment des services réseau correspondant par exemple à un cœur de réseau IMS (pour « IP Multimedia Subsystem »), un réseau de distribution de contenus (ou réseau CDN pour « Content Distribution Network »), ou encore un cœur de réseau EPC (pour « Evolved Packet Core »). Ces services réseau sont créés par une entité d'orchestration qui pour chacun d'entre eux crée un graphe, dit « Forwarding Graph », représentant des fonctions réseau virtualisées, les connexions entre ces fonctions et l'ordre dans lequel un trafic entrant est soumis à ces fonctions réseau virtualisées afin de rendre le service considéré.

Les infrastructures en nuage sont, comme toute infrastructure réseau, susceptibles de faire l'objet d'attaques réseau. Ces attaques sont notamment de nature à compromettre un service réseau mis en œuvre par une telle infrastructure en nuage. Tel que défini actuellement dans un document de spécification de l'ETSI intitulé « Network Functions Virtualisation (NFV); Management and Orchestration », version 1.1.1 de décembre 2014, des notifications de type « Virtual resources fault management » peuvent être émises par des entités de gestion d'infrastructures virtualisées (appelées VIM pour « Virtual Infrastructure Manager » dans la terminologie NFV) vers une entité d'orchestration (appelé NFVO pour «NFV Orchestrator » dans la terminologie NFV) ou vers des entités de gestion des VNFs (appelées VNFM pour VNF Manager). Ces notifications permettent d'identifier une ou plusieurs occurrences d'anomalies mais les entités de gestion d'infrastructures virtualisées n'ont pas la connaissance de la séquence de fonctions réseau virtualisées d'un service réseau pour corréler des événements associés à un flux donné. Les notifications de type « Virtual resources fault management » ne permettent pas de déterminer si une anomalie relève d'une attaque réseau. Une attaque réseau est ainsi susceptible de ne pas être traitée correctement, ce qui peut avoir de lourdes répercussions sur le service réseau cible de l'attaque ainsi que sur le réseau support de ce service (e.g. perte de contrôle d'une ou plusieurs entité du réseau, fuite d'informations confidentielles sur les abonnés du réseau).

Par exemple, US2015/341377A1 et US2014/283051A1 décrivent des procédés de gestion dynamique des menaces.

Un des buts de l'invention est de remédier à des insuffisances/inconvénients de l'état de la technique et/ou d'y apporter des améliorations.

L'invention concerne un procédé selon la revendication 1, une entité de gestion selon la revendications 5, un programme d'ordinateur selon la revendication 8, et un support d'enregistrement selon la revendication 9.

Le procédé de traitement permet à partir par exemple d'une anomalie (e.g. paquets de données non conformes à un type de paquet attendu) du flux entrant de détecter qu'une attaque réseau est en cours, et de mettre en œuvre des traitements visant à rétablir le fonctionnement normal du service réseau attaqué. Ces attaques sont par exemple des attaques de type « vol de service » ou encore de type « vol d'information ». Une attaque de type « vol de service » consiste plus précisément à exploiter une faille dans le service supporté par l'infrastructure réseau en nuage, dans l'objectif d'en retirer un avantage pour un attaquant, comme par exemple la livraison de contenus gratuitement dans le cadre d'un service de livraison de contenus payants. Une attaque de type « vol d'information », consiste également à exploiter une faille de sécurité mais à la différence d'une attaque de type « vol de service », cette faille se situe au niveau d'un système d'exploitation, ou d'une application mise en œuvre sur un serveur objet de l'attaque. Une telle attaque est susceptible d'avoir des conséquences très lourdes sur l'infrastructure hébergeant le service réseau attaqué dans son ensemble si elle n'est pas traitée rapidement. Une attaque de type « vol d'information » peut en effet permettre dans certains cas une prise de contrôle complète d'une ou de plusieurs entités du réseau fournissant le service réseau attaqué. Le procédé permet de contrecarrer de telles attaques en modifiant dynamiquement la séquence de fonctions réseau virtualisée associée au service réseau objet de l'attaque.

Le procédé permet ainsi de rediriger un flux entrant malveillant (flux utilisateur ou flux émis par l'auteur de l'attaque) relatif à un service réseau vers des fonctions réseau virtualisées saines aptes à traiter le flux malveillant.

Selon une caractéristique particulière, le procédé comprend en outre un envoi d'une notification que la séquence initiale a été modifiée, à une entité d'orchestration, l'entité commandant un routage du flux entrant vers la au moins une fonction curative en fonction d'un type du flux entrant.

Les services réseaux proposés dans une infrastructure réseau en nuage sont limités à un catalogue de services réseau prédéfinis et maintenus par une entité d'orchestration, dite « entité NFVO » (pour « Network Functions Virtualization Orchestrator »). En notifiant cette dernière entité que la séquence initiale a été modifiée, le procédé permet une mise à jour instantanée du catalogue de services réseau. Des demandes ultérieures relatives au service réseau ciblé par l'attaque sont ainsi, le cas échéant, directement orientées vers un service réseau non corrompu et formé de fonctions réseau virtualisées aptes à traiter un flux malveillant.

Le routage en fonction du type de flux entrant permet en outre de router le flux malveillant vers des fonctions réseau virtualisées spécialisées par type de flux. Le traitement d'un flux malveillant est ainsi accéléré, seuls les traitements pertinents pour un type de flux concerné étant appliqués.

En outre, la différenciation par type de flux, lorsque plusieurs flux entrant sont émis à destination du service réseau attaqué, mais que seuls certains types de flux sont malveillants, permet de ne router que ces derniers vers les fonctions dites curatives.

Selon une caractéristique particulière, la modification de séquence consiste en une reconfiguration de la connectivité des fonctions réseau virtualisées de la séquence.

Le procédé permet de répondre aux attaques par simple reconfiguration des points de connexion (ou CP pour « Connection Points ») entre fonctions réseau virtualisées. Le procédé permet ainsi d'apporter une réponse rapide en temps réel et simple à une attaque. La reconfiguration est en outre de décision et de portée locale. La mise en œuvre du procédé est par ailleurs facilitée dans la mesure où la modification de la séquence est une simple reconfiguration.

Selon une caractéristique particulière, la fonction réseau virtualisée impactée par l'attaque comprend au moins un composant corrompu, la fonction curative mettant en œuvre uniquement les fonctions mises en œuvre par le au moins un composant corrompu de la fonction réseau virtualisée impactée par l'attaque.

En isolant uniquement les composants de la séquence qui sont corrompus le procédé est accéléré. Lorsque seul un composant mineur d'une fonction réseau virtualisée est impacté par l'attaque il n'est en effet pas nécessaire de mettre en œuvre tous les composants d'une fonction réseau virtualisée, les composants sains de la fonction étant avantageusement réutilisés dans la nouvelle séquence.

Cette réutilisation des composants sains d'une fonction réseau virtualisée impactée par une attaque permet en outre une économie des ressources de l'infrastructure en nuage hébergeant le service. Seuls les composants nécessitant un traitement sont en effet substitués.

Le traitement du flux malveillant par une entité d'orchestration permet d'adapter la réponse à une attaque en fonction du type de cette attaque. Ceci est particulièrement avantageux dans le cas de fonctions réseau virtualisées gérées par exemple par différents équipementiers, chaque équipementier étant susceptible d'appliquer ces propres mesures suite à l'attaque à travers notamment le VNF Manager.

Selon une caractéristique particulière, le module de commande de l'entité de gestion de ressources virtualisées est en outre agencé pour commander un routage du flux entrant malveillant vers la au moins une fonction réseau virtualisée curative en fonction du type du flux entrant malveillant.

L'invention sera mieux comprise à l'aide de la description suivante de modes de réalisation particuliers, en référence aux dessins annexés sur lesquels :
- la figure 1 représente de manière simplifié une infrastructure réseau en nuage selon un mode particulier de réalisation ;
- les figures 2a et 2b représentent un service réseau respectivement avant et après mise en œuvre du procédé de traitement selon un mode particulier de réalisation ;
- la figure 3 représente un organigramme du procédé de traitement, et des échanges entre équipements mettant en œuvre le procédé, selon un mode particulier de réalisation ;
- la figure 4 représente une entité de gestion de ressources virtualisées selon un mode particulier de réalisation.

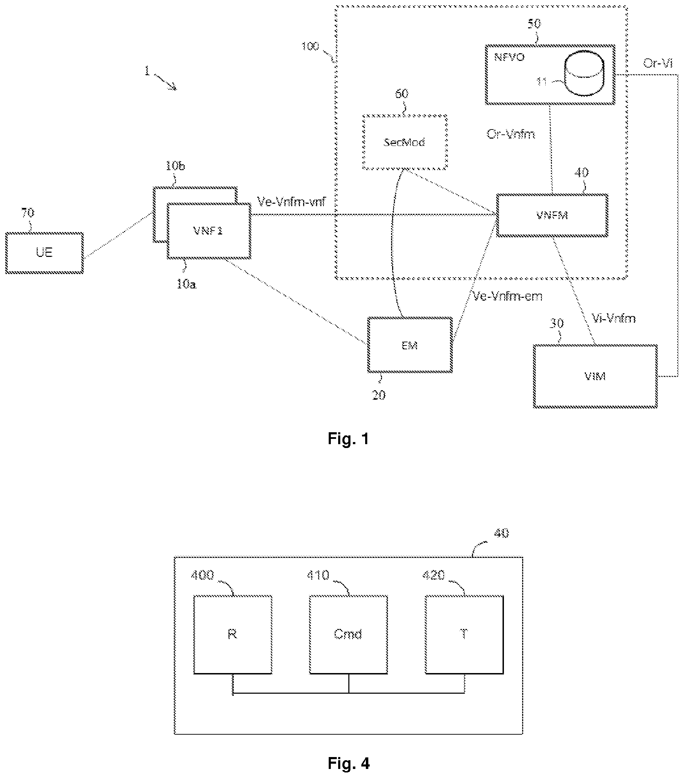

La **figure 1** représente un système 100 de traitement d'un service réseau supporté par une infrastructure de réseau permettant la virtualisation de fonctions réseau selon un mode particulier de réalisation. Le système 100 comprend une entité de gestion de ressources virtualisées 40 et une entité d'orchestration 50. Optionnellement le système 100 comprend également un module de sécurité 60.

L'entité d'orchestration 50 est plus particulièrement en charge du pilotage des entités de gestion de ressources virtualisées 40 et des entités de gestion d'infrastructure virtualisée 30 du réseau de communication 1 dans lequel est mis en œuvre le système 100. L'entité d'orchestration 50 dispose d'un catalogue 11 de services réseau. Ce catalogue 11 est par exemple une base de données agencée pour mémoriser des services réseau et des séquences d'au moins une fonction réseau virtualisée correspondant à ces services. Le catalogue précise notamment un comportement opérationnel prédéfini des fonctions réseau virtualisées sur lesquelles reposent les services réseau du catalogue 11, ainsi que les ressources nécessaires (e.g. nombre de machines virtuelles, mémoire, bande passante, latence) afin de déployer ces fonctions et mettre en œuvre les services réseau du catalogue. Les fonctions réseau virtualisées sont décrites par des descripteurs de fonctions réseau virtualisées (en anglais « VNF descriptor » pour « Virtual Network Function descriptor ») tels que définis par l'ETSI. Les fonctions réseau virtualisées correspondent à des fonctions fournies par l'opérateur du réseau de communication 1 pour traiter un paquet de données émis par exemple depuis un terminal utilisateur 70. Il s'agit à titre d'exemple non limitatif de services de traduction d'adresses réseau, de pare-feu, de services de répartition de charge, de transcodage, de mise en cache, d'optimisation de requête, ou encore d'enrichissement de paquets réseau.

Selon l'architecture NFV définie dans le document de spécifications de l'ETSI « GS NFV-MAN 001 » publié en décembre 2014, lorsqu'un service réseau du catalogue 11 est mis en œuvre dans le réseau de communication 1, l'entité d'orchestration 50 s'adresse aux entités de gestions de ressources virtualisées en charge de gérer les fonctions réseaux virtualisées de la séquence d'au moins une fonction réseau virtualisée formant ce service réseau. Chaque entité de gestion de ressources virtualisées est associée à au moins une fonction réseau virtualisée de la séquence. Une entité de gestion de ressources virtualisées a plus particulièrement pour rôle de gérer le cycle de vie d'une fonction réseau virtualisée, c'est-à-dire sa création, sa mise en œuvre et sa terminaison. Les fonctions réseau virtualisées sont à cette fin installées sur des machines virtuelles (cf. supra) crées et gérées par une entité de gestion d'infrastructure virtualisée 30. Une entité de gestion de ressources virtualisée reçoit en provenance d'une fonction réseau virtualisée dont elle a la charge, des informations dites « FCAPS » (pour « Fault, Configuration, Accounting, Performance, Security ») de gestion d'erreur, de configuration, d'usage, de performance, et de sécurité relatives à cette fonction réseau virtualisée. Ces informations sont gérées par une fonction de gestion EM 20 (pour « Element Management ») tel que décrite dans le document de l'ETSI en section 5.5.1. Elles permettent notamment à une entité de gestion de ressources virtualisées d'adapter les ressources affectées à une fonction réseau virtualisée. A titre d'exemple, l'entité de gestion de ressources virtualisées 40 est en charge de la gestion des fonctions réseaux virtualisées 10a et 10b. Ces fonctions réseaux virtualisées 10a-b assurent par exemple les fonctions d'un serveur web proxy.

Le système 100 comprend par ailleurs un module de sécurité 60. Le module de sécurité 60 permet d'identifier une attaque tel que décrit dans la demande de brevet US2015/0033340 intitulée « Systems and methods for self-tuning network intrusion detection and prévention » du 23 juillet 2014. Une attaque réseau est plus précisément identifiée à partir d'un flux malveillant dans lequel est identifié un motif connu (e.g. source de l'attaque qui n'est pas de confiance, paquets aléatoires, séquences TCP pour « Transmission Control Protocol » incohérentes).

Les communications entre l'entité de gestion de ressources virtualisées 40, l'entité de gestion d'infrastructure virtualisée 30 et les fonctions réseaux virtualisées 10a-b du réseau de communication 1 sont réalisées par l'intermédiaire des interfaces telles que définies dans le document de spécifications « GS NFV-MAN 001 ». Plus précisément, l'entité de gestion de ressources virtualisées 40 communique avec la fonction réseau virtualisée 10a et avec la fonction réseau virtualisée 10b via des interfaces Ve-Vnfm-vnf. L'entité de gestion de ressources virtualisées 40 communique également avec l'entité de gestion d'infrastructure virtualisée 30 via une interface Vi-Vnfm. La communication entre l'entité d'orchestration 50 et l'entité de gestion de ressources virtualisées 40 est assurée par une interface Or-Vnfm.

Seule une entité de gestion de ressources virtualisées 40 est représentée, il n'existe cependant aucune limitation quant au nombre d'entité de gestion de ressources virtualisées mises en œuvre pour fournir un service réseau. En outre, dans un autre mode de réalisation, de même qu'une entité de gestion de ressources virtualisées 40 est susceptible de gérer plusieurs fonctions réseau virtualisées, une fonction réseau virtualisée est susceptible d'être gérée par une ou plusieurs entités de gestion de ressources virtualisées.

Seules deux fonctions réseau virtualisées 10a-b sont représentées, il n'existe cependant aucune limitation quant au nombre de fonctions réseau virtualisées de la séquence de fonctions réseau virtualisées formant un service réseau.

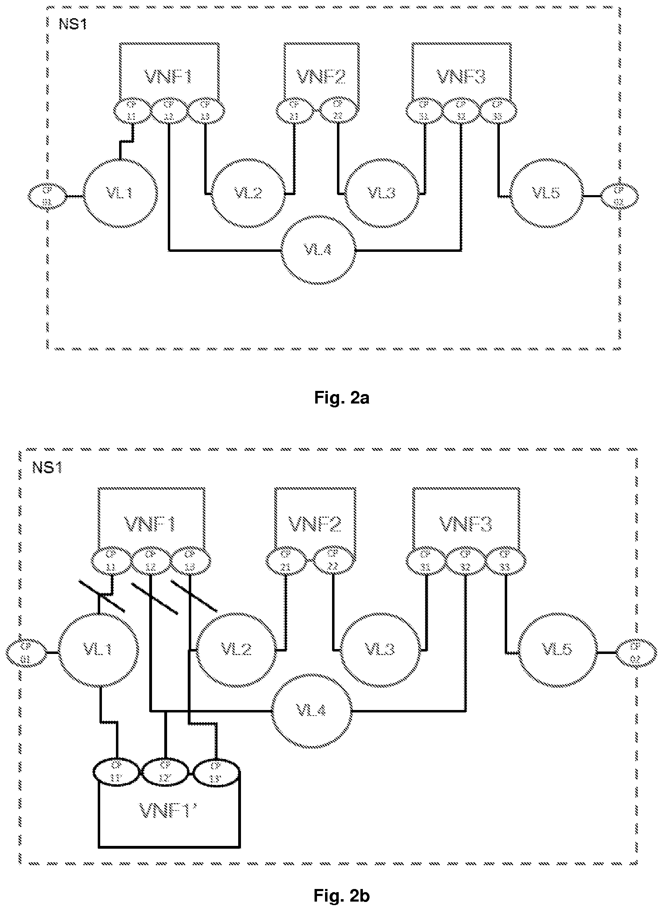

Les **figures 2a et 2b** représentent un service réseau NS1 respectivement avant et après mise en œuvre du procédé de traitement selon un mode particulier de réalisation.

Le service réseau NS1 comprend trois fonctions réseau virtualisées VNF1, VNF2 et VNF3. Le service réseau NS1 traite un ou plusieurs flux entrant reçu au point de connexion CP01, point d'entrée du service réseau NS1, et retourne le ou les flux une fois traités au point de connexion CP02, point de sortie du service réseau NS1. Les points de connexion CP01 et CP02 sont également appelés point de livraison et point de terminaison du service réseau NS1. Les points de connexion sont plus généralement définis comme des points d'entrée/sortie. Il s'agit selon le cas de points d'entrée/sortie d'une fonction réseau virtualisée, ou d'un service réseau.

Les figures 2a et 2b correspondent plus particulièrement à un graphe (dit « Forwarding Graph ») modélisant les relations entre les fonctions réseau virtualisées VNF1, VNF2 et VNF3. Ces relations sont modélisées par des liens virtuels (ou « Virtual Links » selon la terminologie NFV) reliant les fonctions réseau virtualisées par des points de connexions.

La description des liens virtuels comprend en outre des caractéristiques de qualité de service telles que la bande passante souhaitée, la latence, ou encore la gigue (cf. document « GS NFV-MAN 001 », section 6.4.1).

A titre d'exemple, dans le mode de réalisation décrit en relation avec la **figure 2a****,** le service réseau NS1 dans sa configuration initiale est formé d'une séquence de trois fonctions réseau virtualisées VNF1, VNF2 et VNF3. La fonction réseau virtualisée VNF1 comprend trois points de connexion CP11, CP12 et CP13 ; la fonction réseau virtualisée VNF2 comprend deux points de connexion CP21 et CP22 ; et la fonction réseau virtualisée VNF3 comprend trois points de connexion CP31, CP32 et CP33. Le point de connexion CP11 de la fonction réseau virtualisée VNF1 est relié au point d'entrée CP01 du service réseau NS1 par le lien virtuel VL1. Le point de connexion CP33 de la fonction réseau virtualisée VNF3 est relié au point de sortie CP02 du service réseau NS1 par le lien virtuel VL5. La fonction réseau virtualisée VNF1 est outre relié aux fonctions réseau virtualisées VNF2 et VNF3 par respectivement un lien virtuel VL2 entre les points de connexion CP13 et CP21, et par un lien virtuel VL4 entre les points de connexion CP12 et CP32. De même, les fonctions réseau virtualisées VNF2 et VNF3 sont liées par un lien virtuel VL3 entre les points de connexion CP22 et CP31.

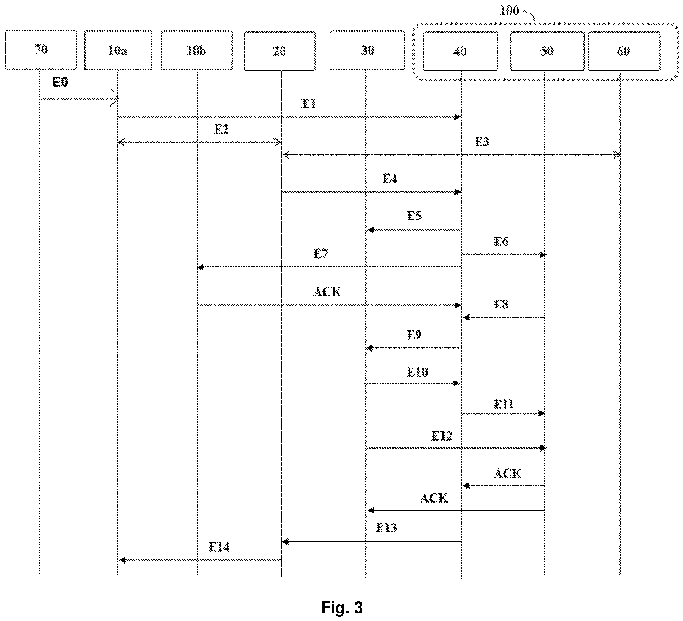

La **figure 2b** illustre le même service réseau NS1, décrit précédemment en relation avec la figure 2a, après que la séquence de fonctions réseau VNF1, VNF2 et VNF3 ait été reconfigurée en réponse à une attaque réseau selon un procédé de traitement qui sera décrit ultérieurement en relation avec la figure 3. La fonction réseau virtualisée VNF1 est selon ce procédé de traitement identifiée dans la séquence initiale impactée par l'attaque réseau. La séquence de fonctions réseau virtualisées est alors reconfigurée afin d'isoler la fonction réseau virtualisée VNF1 et de router les flux à destination de cette dernière fonction vers une fonction réseau virtualisée VNF1', dite fonction curative, mettant en œuvre un traitement du flux ainsi que des fonctions mises en œuvre par la fonction réseau virtualisée VNF1. La reconfiguration de la séquence de fonctions réseau virtualisées est réalisée par une entité de gestion de ressources virtualisées VNFM 40 gérant la fonction réseau virtualisée VNF1 et consiste plus précisément à reconfigurer les liens virtuels comprenant des points de connexion appartenant à la fonction réseau virtualisée VNF1 impactée par l'attaque réseau, à savoir les liens virtuels VL1, VL2 et VL4. Après reconfiguration, la séquence formant le service réseau NS1 est constituée des fonctions réseau virtualisées VNF1', VNF2 et VNF3. La fonction réseau virtualisée comprend trois points de connexion CP11', CP12' et CP13'. Les liens virtuels VL1, VL2 et VL4 sont reconfigurés et lient respectivement le point de connexion CP11' au point de connexion CP01, le point de connexion CP13' au point de connexion CP21, et le point de connexion CP12' au point de connexion CP32. Les liens virtuels VL3 et VL5 sont inchangés.

La **figure 3** représente un organigramme du procédé de traitement, et des échanges entre entités mettant en œuvre le procédé, selon un mode particulier de réalisation. Par la suite, on se place dans une configuration réseau telle que celle décrite en relation avec la figure 1.

Lors d'une étape E0, le terminal 70 envoie une requête HTTP (pour « HyperText Transfert Protocol ») à la fonction réseau virtualisée VNF1 10a. La fonction réseau virtualisée VNF1 10a correspond par exemple à une fonction proxy web, dite « fonction initiale » d'une séquence S d'au moins une fonction réseau virtualisée formant un service réseau NS1 du catalogue de services réseau 11 de l'entité d'orchestration NFVO 50. La requête HTTP constitue un flux entrant pour le service réseau NS1. On suppose par la suite que ce flux entrant comprend des paquets de données malicieux constituant une attaque réseau visant le service réseau NS1.

Lors d'une étape E1, la fonction réseau virtualisée VNF1 10a déclenche une alarme signalant une anomalie à l'entité de gestion de ressources virtualisées VNFM 40.

Lors d'une étape E2, l'anomalie est également détectée par la fonction de gestion EM 20 de la fonction réseau virtualisée VNF1 10a.

Lors d'une étape E3, la fonction de gestion EM 20 de la fonction réseau virtualisée VNF1 10a s'adresse au module de sécurité 60 afin de déterminer et identifier le cas échéant une attaque réseau à partir de l'anomalie détectée dans le flux entrant. Le message envoyé au module de sécurité comprend en particulier un identifiant de la fonction réseau virtualisée pour laquelle une anomalie a été détectée, ainsi qu'un identifiant du point de présence hébergeant cette fonction réseau virtualisée. Le module de sécurité 60 identifie à partir du flux entrant qu'une attaque réseau est en cours, le flux entrant est alors dit « malveillant », et retourne à la fonction de gestion EM 20 une réponse indiquant le type d'attaque subie par le service réseau NS1. A titre d'exemple l'attaque subie est une attaque de type DDoS pour « Distributed Denial of Service ».

Lors d'une étape E4, la fonction de gestion EM 20 de la fonction réseau virtualisée VNF1 10a notifie l'entité de gestion de ressources virtualisées VNFM 40 de l'attaque en précisant la fonction réseau virtualisée visée par l'attaque et le point de présence où est localisée l'attaque.

Lors d'une étape E5, l'entité de gestion de ressources virtualisées VNFM 40 commande à l'entité de gestion d'infrastructures virtualisées VIM 30 la mise en œuvre de la connectivité avec une fonction réseau virtualisée VNF1' 10b, dite fonction curative, apte à mettre en œuvre un traitement du flux malveillant ainsi que des fonctions mises en œuvre par la fonction réseau virtualisée VNF1 10a impactée par l'attaque réseau.

Lors d'une étape E6, l'entité de gestion de ressources virtualisées VNFM 40 informe l'entité d'orchestration 50 que la fonction réseau virtualisée VNF1 10a subit une attaque réseau en précisant notamment le type de fonction réseau virtualisée impactée et le ou les points de présence touchés par l'attaque.

Lors d'une étape E7, l'entité de gestion de ressources virtualisées VNFM 40 demande l'activation des points de connexion de la fonction réseau virtualisée VNF1' 10b afin de router le trafic venant de la fonction réseau virtualisé VNF1 10a vers la fonction VNF1' 10b. La fonction réseau virtualisée VNF1' 10b, une fois ses points de connexion activés, répond à l'entité de gestion de ressources virtualisées VNFM 40 par un message d'acquittement.

Lors d'une étape E8, l'entité d'orchestration 50 valide la modification de séquence initiée à l'étape E5 ainsi que le routage du trafic vers la fonction réseau virtualisée VNF1' 10b.

Lors d'une étape E9, l'entité de gestion de ressources virtualisées VNFM 40 demande à l'entité de gestion d'infrastructure virtualisée VIM 30 de configurer les liens virtuels entre les points de connexion de la fonction réseau virtualisée VNF1' 10b et les points de connexion des fonctions réseau virtualisées auxquelles était connectée la fonction réseau virtualisée VNF1 10a de la séquence initiale de fonctions réseau virtualisées formant le service réseau NS1. Le routage du trafic à destination de l'ancienne fonction réseau virtualisée VNF1 10a est alors immédiatement redirigé via les liens virtuels nouvellement configurés vers la fonction réseau virtualisée VNF1' 10b. La fonction réseau virtualisée 10b est notamment munie, en plus des fonctions propres à la fonction réseau virtualisée VNF1 10a, de fonctions d'inspection des paquets en profondeur (fonctions DPI pour « Deep Packet Inspection) et de fonctions pare-feu, afin de traiter le flux malveillant et ainsi enrayer l'attaque. On suppose dans le présent mode de réalisation que le simple re-routage du trafic vers la fonction réseau virtualisée VNF1' 10b suffit à traiter l'attaque. Le trafic à destination du service NS1 peut ainsi avantageusement être maintenu sans perturbation du service NS1.

Lors d'une étape E10, l'entité de gestion d'infrastructure virtualisée VIM 30 notifie l'entité de gestion de ressources virtualisées VNFM 40 que les points de connexions et les liens virtuels ont été mis à jour.

Lors d'une étape E11, l'entité de gestion de ressources virtualisées VNFM 40 notifie l'entité d'orchestration 50 que le graphe associé au service réseau NS1 a été modifié afin de tenir compte de la nouvelle séquence de fonctions réseau virtualisées. Cette nouvelle séquence correspond à la séquence de fonctions réseau virtualisées précédemment décrite en relation avec la figure 2b. L'entité d'orchestration 50 met alors à jour son catalogue 11 de services réseau pour le service réseau NS1.

Lors d'une étape E12, de même qu'à l'étape E10, l'entité de gestion d'infrastructure virtualisée VIM 30 notifie l'entité d'orchestration 50 que les points de connexions et les liens virtuels ont été mis à jour.

Les notifications envoyées aux étapes E11 et E12 sont acquittées par l'entité d'orchestration 50.

Puis lors d'une étape E13, l'entité de gestion de ressources virtualisées VNFM 40 notifie la fonction de gestion EM 20 de la fonction réseau virtualisée VNF1' 10b de la reconfiguration du graphe associé au service réseau NS1. Cette notification entraîne une opération dite de « post-configuration » et est nécessaire dans le cas où le routage du flux entrant est fonction du flux traité par la VNF1' 10b. Dans un autre mode de réalisation, cette post-configuration permet par exemple à la fonction réseau virtualisée VNF1' 10b de différencier le routage d'un flux entrant suivant sa nature. Seuls les flux correspondant à un service bénéficiant d'une qualité de service élevée sont par exemple routés sur commande de l'entité d'orchestration 50 vers la fonction réseau virtualisée VNF1' 10b.

Lors d'une étape E14, la fonction réseau virtualisée VNF1 10a est détruite.

Dans un autre mode de réalisation, les composants corrompus de la fonction réseau virtualisée VNF1 10a impactés par l'attaque réseau sont identifiés (à l'aide par exemple du module de sécurité 60). La fonction réseau virtualisée VNF1' 10b met alors en œuvre uniquement les fonctions mises en œuvre par les composants corrompus de la fonction réseau virtualisée impactée par l'attaque.

Dans un autre mode de réalisation, l'entité d'orchestration 50 après validation de la modification de la séquence de fonctions réseau virtualisées formant le service réseau NS1, met en œuvre un traitement préventif et/ou curatif complémentaire du flux entrant malveillant.

Dans un autre mode de réalisation, l'anomalie est détectée par l'entité de gestion de ressources virtualisées VNFM 40 qui supervise la fonction réseau virtualisée VNF1 10a attaquée, ou par l'entité d'orchestration 50 responsable du service réseau NS1 impacté.

Dans un autre mode de réalisation, les fonctions de traitement du flux malveillant ainsi que les fonctions mises en œuvre par la fonction réseau virtualisée VNF1 10a impactée par l'attaque réseau mises en œuvre par la fonction réseau virtualisée VNF1 10a sont assurées par deux fonctions réseau virtualisées distinctes.

La **figure 4** représente une entité de gestion de ressources virtualisées 40 gérant au moins une fonction réseau virtualisée d'une séquence, dite séquence initiale, de fonctions réseau virtualisées traitant un flux entrant et formant un service réseau. L'entité de gestion de ressources virtualisées comprend :
- un module de réception 400, agencé pour recevoir une notification qu'une attaque réseau relative au service réseau a été détectée, l'attaque étant constituée d'un flux entrant malveillant ;
- un module de commande 410, agencé pour commander une identification dans la séquence initiale d'au moins une fonction réseau virtualisée impactée par l'attaque ;
- un module de traitement 420 d'une séquence, agencé pour modifier la séquence initiale de telle sorte que le flux entrant malveillant soit routé vers au moins une fonction réseau virtualisée, dite fonction curative mettant en œuvre un traitement du flux malveillant ainsi que des fonctions mises en œuvre par la au moins une fonction réseau virtualisée impactée par l'attaque.

Dans un autre mode de réalisation, le module de commande est en outre agencé pour commander un routage du flux entrant malveillant vers la au moins une fonction réseau virtualisée curative en fonction du type du flux entrant malveillant.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 400, 410 et 420 sont agencés pour mettre en œuvre le procédé de traitement précédemment décrit. Il s'agit de préférence de modules logiciels comprenant des instructions logicielles pour faire exécuter celles des étapes du procédé de traitement précédemment décrit, mises en œuvre par une entité de gestion de ressources virtualisées. L'invention concerne donc aussi :
- un programme pour une entité de gestion de ressources virtualisées, comprenant des instructions de code de programme destinées à commander l'exécution des étapes du procédé de traitement précédemment décrit, lorsque ledit programme est exécuté par ladite entité ;
- un support d'enregistrement lisible par une entité de gestion de ressources virtualisées sur lequel est enregistré le programme pour une telle entité.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de traitement d'un service réseau supporté par une infrastructure de réseau, ladite infrastructure comprenant une entité d'orchestration, un module de sécurité et au moins une entité de gestion de ressources virtualisées, ledit procédé permettant la virtualisation d'au moins une fonction réseau (10a), ledit service réseau étant formé d'une séquence, dite séquence initiale, de ladite au moins une fonction réseau virtualisée (10a) traitant un flux entrant soumis à la séquence, ledit procédé comprenant les étapes suivantes :
- détection (E1, E2) par l'au moins une entité de gestion d'une anomalie relative à ladite au moins une fonction réseau virtualisée ;
- détection et identification (E3) par le module de sécurité d'une attaque réseau ciblant ledit service réseau à partir de ladite anomalie ;
- identification (E3) par ledit module de sécurité dans ladite séquence initiale d'au moins une fonction réseau virtualisée impactée par ladite attaque et comprenant au moins un composant corrompu;
- modification (E5, E7, E9) par l'au moins une entité de gestion de l'infrastructure de ladite séquence initiale pour circonscrire l'attaque de telle sorte que ledit flux entrant destiné à la fonction réseau virtualisée impactée par ladite attaque soit routé vers au moins une fonction réseau virtualisée, dite fonction curative, mettant en œuvre uniquement les fonctions mises en œuvre par ledit au moins un composant corrompu de ladite au moins une fonction réseau virtualisée impactée par ladite attaque.

2. Procédé selon la revendication 1, comprenant en outre un envoi (E11) d'une notification que ladite séquence initiale a été modifiée, à une entité d'orchestration, ladite entité commandant un routage dudit flux entrant vers ladite au moins une fonction curative en fonction d'un type dudit flux entrant.

3. Procédé selon la revendication 1, dans lequel ladite modification de séquence consiste en une reconfiguration de la connectivité des fonctions réseau virtualisées de ladite séquence.

4. Procédé selon la revendication 1, comprenant en outre :
- une validation (E8) par une entité d'orchestration de ladite modification de séquence avant routage dudit flux entrant malveillant vers ladite fonction réseau virtualisée curative ;
- un traitement préventif et/ou curatif complémentaire dudit flux entrant malveillant par ladite entité d'orchestration en fonction d'un type de ladite attaque.

5. Entité de gestion de ressources virtualisées (40), gérant au moins une fonction réseau virtualisée d'une séquence, dite séquence initiale, de fonctions réseau virtualisées traitant un flux entrant soumis à la séquence et formant un service réseau, ladite entité comprenant :
- un module de réception (400), agencé pour recevoir une notification qu'une attaque réseau relative audit service réseau a été détectée ;
- un module de commande (410), agencé pour commander une identification dans ladite séquence initiale d'au moins une fonction réseau virtualisée (10a) impactée par ladite attaque et comprenant au moins un composant corrompu;
- un module de traitement (420) d'une séquence, agencé pour modifier ladite séquence initiale de telle sorte qu'un flux entrant destiné à la fonction réseau virtualisée impactée par ladite attaque, dit flux malveillant, soit routé vers au moins une fonction réseau virtualisée curative (10b) mettant en œuvre uniquement les fonctions mises en œuvre par ledit au moins un composant corrompu de ladite au moins une fonction réseau virtualisée impactée par ladite attaque.

6. Entité de gestion de ressources virtualisées selon la revendication 5, dans laquelle le module de commande est en outre agencé pour commander un routage dudit flux entrant malveillant vers ladite au moins une fonction réseau virtualisée curative en fonction du type dudit flux entrant malveillant.

7. Système (100) de traitement d'un service réseau supporté par une infrastructure de réseau virtualisé, ledit service réseau étant formé d'une séquence, dite séquence initiale, d'au moins une fonction réseau virtualisée traitant un flux entrant soumis à la séquence, ledit système comprenant :
- une entité de gestion de ressources virtualisées (40) selon la revendication 5 ;
- une entité d'orchestration (50) comprenant :
- un module de validation agencé pour valider une modification de séquence traitée par ladite entité de gestion de ressources virtualisées, avant routage d'un flux entrant malveillant vers une fonction réseau virtualisée curative ;
- un module de traitement préventif et/ou curatif agencé pour mettre en œuvre un traitement complémentaire dudit flux entrant malveillant en fonction d'un type d'attaque,
- un module de sécurité (60) agencé pour identifier dans ladite séquence initiale au moins une fonction réseau virtualisée impactée par ladite attaque et comprenant au moins un composant corrompu

8. Programme pour une entité de gestion de ressources virtualisées, comprenant des instructions de code de programme destinées à commander l'exécution des étapes du procédé selon l'une des revendications 1 à 4, lorsque ledit programme est exécuté par une entité de gestion de ressources virtualisées.

9. Support d'enregistrement lisible par une entité de gestion de ressources virtualisées sur laquelle est enregistré le programme selon la revendication 8.

## Patentansprüche

1. Verfahren zur Behandlung eines Netzwerkdiensts, der von einer Netzwerkinfrastruktur gestützt wird, wobei die Infrastruktur eine Orchestrierungseinheit, ein Sicherheitsmodul und mindestens eine Einheit zur Verwaltung virtualisierter Ressourcen umfasst, wobei das Verfahren die Virtualisierung mindestens einer Netzwerkfunktion (10a) gestattet, wobei der Netzwerkdienst von einer Sequenz, der Initialsequenz, der mindestens einen virtualisierten Netzwerkfunktion (10a) gebildet ist, die einen eingehenden Fluss behandelt, der der Sequenz unterzogen ist, wobei das Verfahren die folgenden Schritte umfasst:
- Feststellen (E1, E2), durch die mindestens eine Verwaltungseinheit, einer Anomalie in Bezug auf die mindestens eine virtualisierte Netzwerkfunktion;
- Feststellen und Identifizieren (E3), durch das Sicherheitsmodul, eines Netzwerkangriffs auf den Netzwerkdienst ausgehend von der Anomalie;
- Identifizieren (E3), durch das Sicherheitsmodul in der Initialsequenz, mindestens einer virtualisierten Netzwerkfunktion, die von dem Angriff beeinflusst wird und mindestens eine korrupte Komponente umfasst;
- Ändern (E5, E7, E9), durch die mindestens eine Verwaltungseinheit, der Infrastruktur der Initialsequenz, um den Angriff so abzugrenzen, dass der eingehende Fluss, der für die virtualisierte Netzwerkfunktion bestimmt ist, die von dem Angriff beeinflusst wird, zu mindestens einer virtualisierten Netzwerkfunktion, der kurativen Funktion, weitergeleitet wird, die nur die Funktionen umsetzt, die von der mindestens einen korrupten Komponente der mindestens einen virtualisierten Netzwerkfunktion umgesetzt werden, die von dem Angriff beeinflusst wird.

2. Verfahren nach Anspruch 1, ferner umfassend ein Senden (E11) einer Benachrichtigung, dass die Initialsequenz verändert wurde, an eine Orchestrierungseinheit, wobei die Einheit eine Weiterleitung des eingehenden Flusses zu der mindestens einen kurativen Funktion in Abhängigkeit von einer Art des eingehenden Flusses steuert.

3. Verfahren nach Anspruch 1, wobei die Sequenzänderung aus einem Umkonfigurieren der Konnektivität der virtualisierten Netzwerkfunktionen der Sequenz besteht.

4. Verfahren nach Anspruch 1, ferner umfassend:
- ein Validieren (E8), durch eine Orchestrierungseinheit, der Sequenzänderung vor Weiterleitung des bösartigen eingehenden Flusses zu der kurativen virtualisierten Netzwerkfunktion;
- ein ergänzendes präventives und/oder kuratives Behandeln des bösartigen eingehenden Flusses durch die Orchestrierungseinheit in Abhängigkeit von einer Art des Angriffs.

5. Einheit zur Verwaltung virtualisierter Ressourcen (40), die mindestens eine virtualisierte Netzwerkfunktion einer Sequenz, der Initialsequenz, virtualisierter Netzwerkfunktionen verwaltet, die einen eingehenden Fluss behandeln, der der Sequenz unterzogen ist, und einen Netzwerkdienst bilden, wobei die Einheit Folgendes umfasst:
- ein Empfangsmodul (400), das angeordnet ist, eine Benachrichtigung zu empfangen, dass ein Netzwerkangriff bezogen auf den Netzwerkdienst festgestellt wurde;
- ein Steuerungsmodul (410), das angeordnet ist, eine Identifizierung, in der Initialsequenz, mindestens einer virtualisierten Netzwerkfunktion (10a) zu steuern, die von dem Angriff beeinflusst wird und mindestens eine korrupte Komponente umfasst;
- ein Modul zur Behandlung (420) einer Sequenz, das angeordnet ist, die Initialsequenz so zu ändern, dass ein eingehender Fluss, der für die virtualisierte Netzwerkfunktion bestimmt ist, die von dem Angriff beeinflusst wird, bösartiger Fluss genannt, zu mindestens einer kurativen virtualisierten Netzwerkfunktion (10b) weitergeleitet wird, die nur die Funktionen umsetzt, die von der mindestens einen korrupten Komponente der mindestens einen virtualisierten Netzwerkfunktion umgesetzt werden, die von dem Angriff beeinflusst wird.

6. Einheit zur Verwaltung virtualisierter Ressourcen nach Anspruch 5, wobei das Steuerungsmodul ferner angeordnet ist, eine Weiterleitung des bösartigen eingehenden Flusses zu der mindestens einen kurativen virtualisierten Netzwerkfunktion in Abhängigkeit von der Art des bösartigen eingehenden Flusses zu steuern.

7. System (100) zur Behandlung eines Netzwerkdiensts, der von einer virtualisierten Netzwerkinfrastruktur gestützt wird, wobei der Netzwerkdienst von einer Sequenz, der Initialsequenz, mindestens einer virtualisierten Netzwerkinfrastruktur gebildet ist, die einen eingehenden Fluss behandelt, der der Sequenz unterzogen ist, wobei das System Folgendes umfasst:
- eine Einheit zur Verwaltung virtualisierter Ressourcen (40) nach Anspruch 5;
- eine Orchestrierungseinheit (50) umfassend:
- ein Validierungsmodul, das angeordnet ist, eine Änderung einer Sequenz, die von der Einheit zur Verwaltung virtualisierter Ressourcen behandelt wird, vor Weiterleitung eines bösartigen eingehenden Flusses zu einer kurativen virtualisierten Netzwerkfunktion zu validieren;
- ein Modul zur präventiven und/oder kurativen Behandlung, das angeordnet ist, eine ergänzende Behandlung des bösartigen eingehenden Flusses in Abhängigkeit von einer Angriffsart umzusetzen,
- ein Sicherheitsmodul (60), das angeordnet ist, in der Initialsequenz mindestens eine virtualisierte Netzwerkfunktion zu identifizieren, die von dem Angriff beeinflusst wird und mindestens eine korrupte Komponente umfasst.

8. Programm für eine Einheit zur Verwaltung virtualisierter Ressourcen, umfassend Programmcode-Anweisungen zur Steuerung der Ausführung der Schritte des Verfahrens nach einem der Ansprüche 1 bis 4, wenn das Programm von einer Einheit zur Verwaltung virtualisierter Ressourcen ausgeführt wird.

9. Speichermedium, das von einer Einheit zur Verwaltung virtualisierter Ressourcen gelesen werden kann, auf welchem das Programm nach Anspruch 8 gespeichert ist.

## Claims

1. Method for processing a network service supported by a network infrastructure, said infrastructure comprising an orchestration entity, a security module and at least one virtualized resource management entity, said method allowing at least one network function (10a) to be virtualized, said network service being formed by a sequence, called initial sequence, of said at least one virtualized network function (10a) for processing an incoming stream subject to the sequence, said method comprising the following steps:
- detection (E1, E2) by the at least one management entity of an anomaly relating to said at least one virtualized network function;
- detection and identification (E3) by the security module of a network attack targeting said network function from said anomaly;
- identification (E3) by said security module in said initial sequence of at least one virtualized network function impacted by said attack and comprising at least one corrupted component;
- modification (E5, E7, E9) by the at least one management entity of the infrastructure of said initial sequence to circumscribe the attack such that said incoming stream intended for the virtualized network function impacted by said attack is routed to at least one virtualized network function, called curative function, implementing only the functions implemented by said at least one corrupted component of said at least one virtualized network function impacted by said attack.

2. Method according to Claim 1, further comprising the sending (E11) of a notification that said initial sequence has been modified, to an orchestration entity, said entity controlling a routing of said incoming stream to said at least one curative function as a function of a type of said incoming stream.

3. Method according to Claim 1, wherein said sequence modification consists of a reconfiguration of the connectivity of the virtualized network functions of said sequence.

4. Method according to Claim 1, further comprising:
- a validation (E8) by an orchestration entity of said sequence modification before routing of said malicious incoming stream to said curative virtualized network function;
- a complementary preventative and/or curative processing of said malicious incoming stream by said orchestration entity as a function of a type of said attack.

5. Virtualized resource management entity (40), managing at least one virtualized network function of a sequence, called initial sequence, of virtualized network functions processing an incoming stream subject to the sequence and forming a network service, said entity comprising:
- a reception module (400), arranged to receive a notification that a network attack relating to said network service has been detected;
- a control module (410), arranged to control an identification in said initial sequence of at least one virtualized network function (10a) impacted by said attack and comprising at least one corrupted component;
- a sequence processing module (420), arranged to modify said initial sequence so that an incoming stream intended for the virtualized network function impacted by said attack, called malicious stream, is routed to at least one curative virtualized network function (10b) implementing only the functions implemented by said at least one corrupted component of said at least one virtualized network function impacted by said attack.

6. Virtualized resource management entity according to Claim 5, wherein the control module is further arranged to control a routing of said malicious incoming stream to said at least one curative virtualized network function as a function of the type of said malicious incoming stream.

7. System (100) for processing a network service supported by a virtualized network infrastructure, said network service being formed by a sequence, called initial sequence, of at least one virtualized network function processing an incoming stream subject to the sequence, said system comprising:
- a virtualized resource management entity (40) according to Claim 5;
- an orchestration entity (50) comprising:
- a validation module arranged to validate a sequence modification processed by said virtualized resource management entity, before routing of a malicious incoming stream to a curative virtualized network function;
- a preventive and/or curative processing module arranged to implement a complementary processing of said malicious incoming stream as a function of a type of attack,
- a security module (60) arranged to identify in said initial sequence at least one virtualized network function impacted by said attack and comprising at least one corruptive component.

8. Program for a virtualized resource management entity, comprising program code instructions intended to control the execution of the steps of the method according to one of Claims 1 to 4, when said program is run by a virtualized resource management entity.

9. Storage medium that can be read by a virtualized resource management entity on which the program according to Claim 8 is stored.
